# EUROPÄISCHE PATENTSCHRIFT

(11) **EP 2 585 391 B1**
(45) Veröffentlichungstag und Bekanntmachung des Hinweises auf die Patenterteilung: **25.05.2016**
(21) Anmeldenummer: 11711778.8
(22) Anmeldetag: 25.03.2011
(51) Int. Cl.: B65G 47/82, C03B 9/453

(54) **VORRICHTUNG ZUM ÜBERSCHIEBEN VON GLASGEGENSTÄNDEN AUF EIN TRANSPORTBAND**
DEVICE FOR PUSHING GLASS OBJECTS ONTO A CONVEYOR BELT
DISPOSITIF POUR FAIRE GLISSER DES OBJETS EN VERRE SUR UNE BANDE TRANSPORTEUSE

(30) Priorität: 25.06.2010 DE 102010025168
(43) Veröffentlichungstag der Anmeldung: 01.05.2013
(73) Patentinhaber: Heye International GmbH, 31683 Obernkirchen (DE)
(72) Erfinder: FELGENHAUER, Benedikt, 32049 Herford (DE); HÜBNER, Matthias, 31655 Stadthagen (DE)
(74) Vertreter: Sobisch, Peter
(86) Internationale Anmeldenummer: PCT/EP2011/001496
(87) Internationale Veröffentlichungsnummer: WO 2011/160739

(56) Entgegenhaltungen:
- EP-A1- 1 627 858
- EP-A1- 1 886 977
- EP-A2- 1 577 272
- DE-A1-102004 007 507
- DE-B3-102004 010 238

## Beschreibung

Die Erfindung bezieht sich auf eine Vorrichtung entsprechend dem Oberbegriff des Anspruchs 1.

Derartige Vorrichtungen kommen als Überschieber bei der Herstellung von Hohlglasartikeln zum Einsatz und dienen dazu, den einer Fertigform entnommenen und auf einer ruhenden Absetzplatte abgestellten Artikel auf ein sich kontinuierlich mit einer gleichförmigen Geschwindigkeit bewegendes Transportband zu überführen. Die Artikel müssen auf dem Transportband in einer Hintereinanderaufstellung positioniert werden und gelangen anschließend in einen Kühlofen. Da bei IS-Maschinen (individual section) das Transportband mit einer Vielzahl von Fertigungsstationen zusammenwirkt, deren jede mit einer Absetzplatte versehen ist, muss der Vorgang des Überschiebens der Hohlglasgegenstände innerhalb eines von dem Arbeitstakt der übrigen Fertigungsstationen sowie der Transportgeschwindigkeit des Bandes abhängigen Zeitintervalls abgewickelt werden, wobei das Überschieben ferner dahingehend angelegt sein muss, dass ein Umfallen oder ein Beschädigen der Hohlglasgegenstände ebenso vermieden werden muss wie ein ungenaues Positionieren auf dem Band. Am Ende der Überführungsbewegung muss jeder Hohlglasartikel in einer definierten Position auf dem Band aufstehen und sich geschwindigkeitsgleich mit diesem bewegen.

Aus dem Dokument DE 10 2004 010 238 B3 ist eine solche Vorrichtung bekannt, bei welcher ein an seinem einen Ende um eine vertikale ortsfest angeordnete Achse schwenkbarer erster Hebel an seinem anderen Ende ebenfalls um eine vertikale Achse schwenkbar das eine Ende eines zweiten Hebels trägt, an dessen anderem Ende wiederum um eine senkrechte Achse schwenkbar ein mit drei Schubfingern ausgerüsteter Überschieber gelagert ist. Den Rotationen des ersten Hebels um die ortsfeste Achse, des zweiten Hebels gegenüber dem ersten Hebel sowie des Überschiebers gegenüber dem zweiten Hebel sind drei voneinander unabhängig steuerbare, ortsfest angeordnete Antriebe zugeordnet, wobei aus der Überlagerung der durch diese generierten drei Teilbewegungen eine Überführungskurve beginnend an einem Aufnahmepunkt auf der Absetzplatte und endend an einem Übergabepunkt auf dem Transportband darstellbar ist. Die Übertragung der Drehbewegungen der drei Antriebe über die Hebel bis zu dem Überschieber wird mittels Zahnriemengetrieben bewirkt, deren Betrieb als wartungsintensiv gilt. Hinzu kommt ein großer Aufwand, der durch eine anfängliche Zusammenfassung über ineinandergeführte Hohlwellen und anschließende Trennung zwecks Einleitung in das jeweilige Bauteil bedingt ist, dessen Drehbewegung zu steuern ist.

Aus dem Dokument EP 1 627 858 B1 ist eine weitere vergleichbare Vorrichtung bekannt, bei der ein an seinem einen Ende um eine vertikale ortsfest angeordnete Achse schwenkbarer erster Hebel an seinem anderen Ende ebenfalls um eine vertikale Achse schwenkbar das eine Ende eines zweiten Hebels trägt, an dessen anderem Ende wiederum um eine senkrechte Achse schwenkbar ein Überschieber gelagert ist. Den Rotationen des ersten Hebels um die ortsfeste Achse, des zweiten Hebels gegenüber dem ersten Hebel und derjenigen des Überschiebers gegenüber dem zweiten Hebel sind voneinander unabhängig steuerbare Antriebe zugeordnet, welche ortsfest angeordnet sein können. Vergleichsweise aufwändig erscheint bei dieser Ausführungsform die Bildung einer Kette bestehend aus den drei Antrieben, dem zweiten Hebel, dem ersten Hebel und dem Überschieber, wobei an dem einen Ende dieser Kette die drei Teilbewegungen eingeführt und nacheinander in den genannten Bauelementen umgesetzt werden, da z. B. alleine für die Übertragung der die Teilbewegung des Überschiebers bewirkenden Rotation des dem zugeordneten ortsfesten Antrieb zahlreiche Getriebestufen benötigt werden.

Nachdem diese Vorrichtungen unter den Betriebsbedingungen einer Hohlglasfertigung eingesetzt werden, somit in einer durch Hitze, Schmutz und Feuchtigkeit, insbesondere auch abrasive Stoffe gekennzeichneten Atmosphäre, sind mit Hinblick auf die zu erwartende Standzeit, jedoch auch Wartungskosten Vorkehrungen zum Schutz vor diesen Umgebungseinflüssen unerlässlich. Diesem Stand der Technik sind jedoch keinerlei, auf eine Lösung dieses Problems abzielende Maßnahmen entnehmbar.

Es ist die Aufgabe der Erfindung, eine Vorrichtung der eingangs dargestellten Art mit Hinblick auf einen einfachen konstruktiven Aufbau sowie eine beanspruchungsgerechtere Gestaltung hin zu verbessern. Gelöst ist diese Aufgabe bei einer solchen Vorrichtung durch die Merkmale des Kennzeichnungsteils des Anspruchs 1.

Erfindungswesentlich ist hiernach die Anlenkung des Überschiebers an einem Kurbelarm, wobei zur Darstellung einer Schwenkbewegung gegenüber dem Kurbelarm eine Schubstange vorgesehen ist, die mit dem einen der drei Elektromotoren in Antriebsverbindung steht. Die Schwenkachse des Überschiebers gegenüber dem Kurbelarm sowie die beiden Achsen, um die die Schubstange an ihren beiden Enden schwenkbar angelenkt ist, verlaufen vorzugsweise parallel zueinander, so dass mit sehr einfachen Mitteln eine Schwenkbewegung in einer durch den Kurbelarm und den Überschieber definierbaren Ebene eingerichtet ist.

Die Merkmale des Anspruchs 2 sind auf die Lagerung der den Kurbelarm und damit den Überschieber tragenden Welle gerichtet, welche in einer Hohlwelle, die ihrerseits in einer Muffe gelagert ist, erfolgt. Die die Hohlwelle umgebende Muffe ist ihrerseits unter Zwischenanordnung eines Auslegers auf einer ortsfest angeordneten Welle gelagert, die mit einem Elektromotor in Antriebsverbindung steht, der somit zur Darstellung einer exzentrischen Schwenkbewegung der Muffe um die Achse der ortfest angeordneten Welle dient. Der durch die Muffe eingeleiteten Drehbewegung um die Achse der genannten ortsfest angeordneten Welle wird somit über die Hohlwelle eine Drehbewegung um die Achse der Muffe überlagert.

Die Merkmale der Ansprüche 3 und 4 sind auf die weitere Ausgestaltung der Antriebsverbindung zwischen der Muffe einerseits und einem ortfest angeordneten Elektromotor andererseits gerichtet. Hierzu ist ein erstes Stirnradgetriebe vorgesehen, in welches ein auf der genannten ortsfest angeordneten Welle relativ zu dieser drehbar gelagertes Zahnrad einbezogen ist.

Die Merkmale der Ansprüche 5 und 6 sind auf die weitere Ausgestaltung der Antriebsverbindung zwischen der den Kurbelarm tragenden Welle einerseits und einem ortsfest angeordneten Elektromotor andererseits gerichtet. Hierzu ist ein zweites Stirnradgetriebe vorgesehen, in welches ebenfalls ein auf der genannten ortsfest angeordneten Welle relativ zu dieser drehbar gelagertes Zahnrad einbezogen ist.

Aufgrund der Nutzung der genannten ortsfest angeordneten Welle zur Lagerung von Getriebekomponenten der beiden Stirnradgetriebe und zum Antrieb des genannten Kurbelarmes um deren Achse ist eine außerordentlich raumsparende Bauweise der Vorrichtung gegeben.

Die Abtriebswelle des einen der drei Elektromotoren erstreckt sich entsprechend den Merkmalen des Anspruchs 7 vorzugsweise koaxial zu der genannten ortsfest angeordneten Welle. Somit werden zur Einleitung einer Drehbewegung des Kurbelarmes um deren Achse keine zwischengeordneten Getriebekomponenten benötigt.

Da bei diesem Konzept im Vergleich zu dem eingangs vorgestellten Stand der Technik nicht zu viele Drehbewegungen ineinander verlaufen, können stabile, durch höhere dynamische Tragzahlen gekennzeichnete Lagerungen eingesetzt werden, so dass sich eine vergleichsweise hohe Lebensdauer ergibt.

Durch die Verwendung von lediglich zwei Stirnradgetrieben bereits ergibt sich ein sehr einfacher, durch eine reduzierte Teilevielfalt gekennzeichneter Aufbau und hiermit einhergehend der Vorteil geringerer Kosten für die Fertigung sowie die Montage.

Lagerungen, die großer Hitze ausgesetzt sind, können als wartungsfreie, einfach auswechselbare Trockengleitlager ausgeführt sein.

Die Merkmale der Ansprüche 8 bis 13 sind auf die Ausgestaltung eines Gehäuses gerichtet, in welchem die Vorrichtung bis auf den oberseitig herausragenden Überschieber untergebracht ist. Das beispielsweise zu der Achse der zentralen ortsfest angeordneten Welle rotationssymmetrisch ausgebildete Gehäuse ist oberseitig durch eine Deckscheibe geschlossen und besteht aus einem topfartigen, bodenseitig durch ein deckelartiges Teil gebildeten Oberteil, aus dem lediglich die den Überschieber tragende Muffe herausragt, und einem Unterteil unterhalb des deckelartigen Teils, welches durch eine Blechhaube gebildet ist und zur Aufnahme der drei Elektromotoren dient. Das topfartige Oberteil einschließlich des genannten Deckelteils kann aus einem Gusswerkstoff bestehen und es dient dieses Oberteil der Auf-nahme von Getriebeteilen sowie einer Ölfüllung. Dies eröffnet die Möglichkeit der Einrichtung einer an der Lebensdauer der Vorrichtung orientierten Schmierung. Das die Elektromotoren aufnehmende Unterteil bietet einen Schutz vor Umgebungseinflüssen.

Die Merkmale der Ansprüche 14 und 15 sind auf weitere vorteilhafte Ausgestaltungen der Vorrichtung gerichtet. Durch das Gehäuse, jedoch auch aufgrund des Umstands, dass dieses unterhalb des Niveaus einer Absetzplatte angeordnet ist, ist ein Schutz der Komponenten der Vorrichtung gegenüber Hitze, Schmutz und Feuchtigkeit eingerichtet.

Die Erfindung wird im Folgenden unter Bezugnahme auf das in den Zeichnungen dargestellte Ausführungsbeispiel näher erläutert werden. Es zeigen:

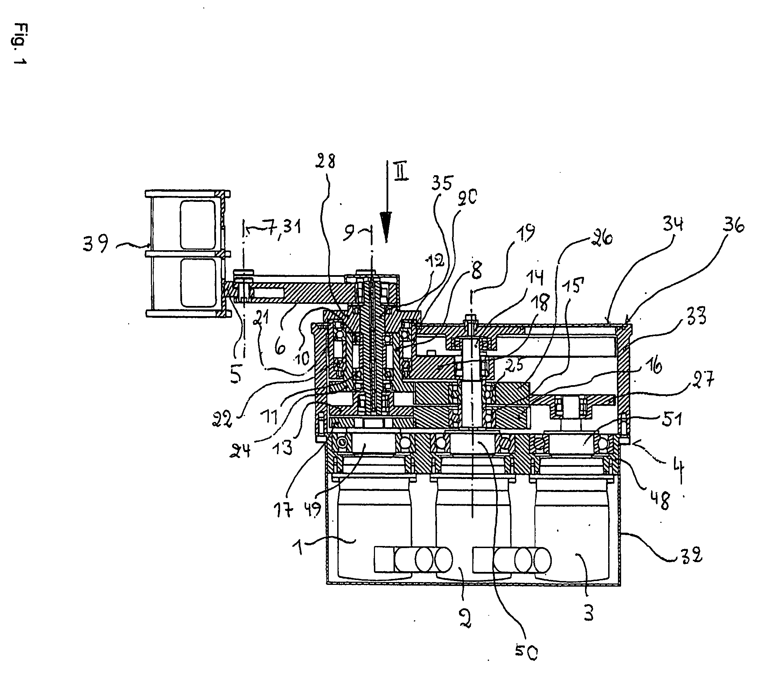

- Fig. 1: eine Darstellung der erfindungsgemäßen Vorrichtung in einer vertikalen Schnittebene;
- Fig. 2: eine Draufsicht auf die Vorrichtung gemäß Pfeil II der Fig. 1;
- Fig. 3: eine grafische Darstellung der mit der Vorrichtung gemäß Fig. 1 darzustellenden Überschiebebewegung.

Mit 1 bis 3 sind drei, an dem deckelartigen Teil 48 eines Gehäuses 4 ortsfest angeordnete Elektromotoren bezeichnet, die in einer im Folgenden zu beschreibenden Weise zum Antrieb eines Überschiebers 5 bestimmt sind, der an einem Kurbelarm 6 um eine vertikale Achse 7, somit in einer Horizontalebene schwenkbar gelagert ist. Der Kurbelarm 6 steht mit einer in einer Hohlwelle 8 um eine vertikale Achse 9 mittels Wälzlagern 10, 11 gelagerten Welle 12 in drehfester Verbindung, auf welcher ein Zahnrad 13 drehfest angeordnet ist. Das Zahnrad 13 steht mit einem auf einer zentralen, sich vertikal erstreckenden Welle 14 mittels eines Wälzlagers 15 relativ zu dieser drehbar gelagerten Zahnrad 16 im Eingriff, welches gleichzeitig mit einem auf der Abtriebswelle 49 des Elektromotors 1 angeordneten Zahnrad 17 im Eingriff steht. Eine Baugruppe, bestehend u. a. aus der Welle 12, den Zahnrädern 13, 17, der Hohlwelle 8 sowie der Muffe 20 ist somit um die Achse 19 schwenkbar angeordnet.

Die Zahnräder 13, 16, 17 bilden ein erstes zur Übertragung der Abtriebsdrehzahl des Elektromotors 1 auf die Drehung der Welle 12 um die Achse 9 bestimmtes Stirnradgetriebe.

Mit 18 ist ein, mit der Welle 14 drehfest verbundener, um deren Achse 19 drehbar gelagerter Ausleger bezeichnet, der an seinem, von der Achse 19 entfernten Ende eine Muffe 20 trägt, deren Achse sich koaxial zu der Achse 9 erstreckt. In dieser Muffe 20 ist über Wälzlager 21, 22 die Hohlwelle 8 ebenfalls um die Achse 9 drehbar gelagert.

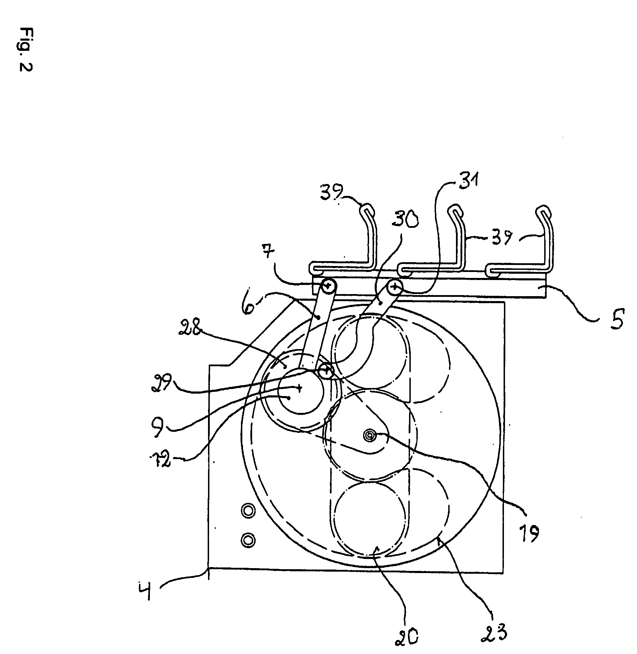

Der Elektromotor 2 steht über seine Abtriebswelle 50 unmittelbar mit der Welle 14 in Verbindung und dient somit der Darstellung einer hin- und hergehenden Drehbewegung der Muffe 20 um die zentrale Achse 19 innerhalb und entlang des in Fig. 2 strichpunktiert wiedergegebenen Bereiches 23.

Die Hohlwelle 8 trägt an ihrem unteren Ende einen Zahnkranz 24, der mit einem, auf der zentralen Welle 14 über ein Wälzlager 25 drehbar gelagerten Zahnrad 26 im Eingriff steht, welches über ein weiteres Zahnrad 27 mit der Abtriebswelle 51 des Elektromotors 3 in Antriebsverbindung steht.

Die Hohlwelle 8 steht mit einem in Fig. 2 gezeigten Ringkörper 28 in fester Verbindung, an dem um eine sich parallel zu der Achse 9 erstreckenden Achse 29 das eine Ende einer Schubstange 30 schwenkbar gelagert ist, deren anderes Ende um eine zu der Achse 29 parallele Achse 31 mit Abstand von der Achse 7 an dem Überschieber 5 gelagert ist.

Man erkennt, dass die Anordnung der Achsen 7, 9, 29, 31 in Verbindung mit dem Kurbelarm 6, dem Ringkörper 28 sowie dem Überschieber 5 eine Viergelenkkette bilden, durch welche eine Drehung des Ringkörpers 28 um die Achse 9 und relativ zu der den Kurbelarm tragenden Welle 12 eine Drehung des Überschiebers 5 um die Achse 7 gegenüber dem Kurbelarm 6 bewirkt.

Die Zahnräder 27, 26 in Verbindung mit dem Zahnkranz 24 bilden ein zweites, zur Übertragung der Abtriebsdrehzahl des Elektromotors 3 bestimmtes Stirnradgetriebe, so dass über die Abtriebswelle 51 des dritten Elektromotors 3 eine Antriebsverbindung für die Schwenkbewegung des Überschiebers 5 um die Achse 7 dargestellt ist.

Das Gehäuse 4 besteht aus dem deckelartigen, die Elektromotoren 1 bis 3 tragenden Teil 48 und einem, die vorstehend beschriebenen Getriebekomponenten aufnehmenden, ein Ölbad führenden, vorzugsweise als Gussteil ausgebildeten topfartigen Oberteil 33. Das lösbar mit dem Oberteil 33 in Verbindung stehende Teil 48 kann gleichermaßen als Gussteil ausgebildet sein. Eine mit dem Teil 48 in Verbindung stehende, ein Unterteil des Gehäuses 4 bildende Blechhaube 32 umgibt die drei Elektromotoren 1, 2, 3 und stellt einen Schutz gegenüber Umgebungseinflüssen dar.

Mit 34 ist eine Deckscheibe bezeichnet, welche um die Achse 19 zentriert ist und in einem Randbereich eine Öffnung 35 aufweist, durch welche hindurch sich die Muffe 20 erstreckt. Die um die Achse 19 drehende Muffe 20 übt eine Mitnahmewirkung auf die Deckscheibe 34 aus, welche in ihrem Umfangsbereich über eine Dichtung 36 mit der Berandung des Oberteils 33 in Kontakt steht.

Dichtend gegenüber der Umgebung abgeschlossen durch den Ringkörper 28 sowie die Welle 12 ist oberseitig auch die Muffe 20.

Somit ist der Innenraum des Gehäuses 4 gegenüber der Umgebung geschützt angeordnet.

Oberseitig aus der Deckscheibe 34 heraus erstreckt sich lediglich das den Kurbelarm 6 sowie die Schubstange 30 tragende System aus dem Ringkörper 28 sowie der Welle 12. An dem Überschieber 5 sind in an sich bekannter Weise drei zum Schieben von Glasgegenständen von einer Absetzplatte 37 auf ein Transportband 38 bestimmte Schubfinger 39 angeordnet.

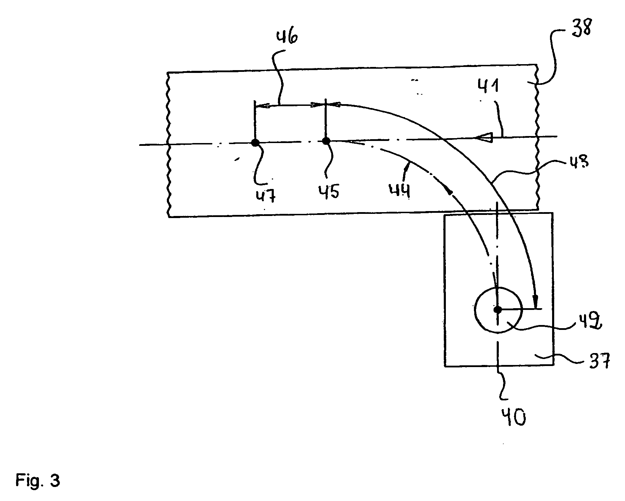

Zur Beschreibung der mittels dieser Vorrichtung darzustellenden Überschiebebewegung wird im Folgenden insbesondere auf die Fig. 3 Bezug genommen.

Auf der Absetzplatte 37 werden periodisch Gruppen von jeweils drei Glasgegenständen bzw. Hohlglasgegenständen entlang einer Linie 40 abgestellt, welche sich rechtwinklig zu der Mittellinie des sich in der Richtung 41 mit einer definierten Geschwindigkeit gleichförmig bewegenden Transportbandes 38 erstreckt. Lediglich beispielhaft ist ein auf die Absetzplatte 37 gebrachter Glasgegenstand 42 in seiner Ausgangslage, dass heißt zu Beginn einer Überschiebebewegung gezeigt.

Die Überschiebebewegung mittels des Überschiebers 5 ist nach Maßgabe einer gekrümmten Bahn 43 einer Bahnkurve 44 angelegt, wobei die Schubfinger 39 an den Glasgegenständen 42 anliegen und wobei die Bahnkurve 44 tangential an einen Berührungspunkt 45 mit der Richtung 41 der Bewegung des Transportbandes 38 herangeführt wird. Die Glasgegenstände 42 werden im Anschluss an den Berührungspunkt 45 durch den Überschieber 5 noch um ein lineares Wegelement 46 der Bahnkurve 44, somit richtungsgleich mit der Förderrichtung des Transportbandes 38 bis zu einem Lösepunkt 47, in dem der Überschieber 5 von den Glasgegenständen gelöst wird, vorgeschoben, und zwar geschwindigkeitsgleich mit dem Transportband 38. Anschließend löst sich der Überschieber 5 von den Glasgegenständen 42, um in Richtung auf die Absetzplatte 37 zwecks Einleitung eines neuen Arbeitszyklus zurückgeführt zu werden.

Die zur Darstellung der zyklischen Bewegung des Überschiebers 5, welche die dargestellte Bahnkurve 44, bestehend aus einem gekrümmten und einem geradlinigen Teil umfasst, erforderlichen Teilbewegungen, aus deren Überlagerung die Gesamtbewegung des Überschiebers 5 resultiert, werden durch Ansteuerung der drei Elektromotoren 1 bis 3 generiert.

Es handelt sich bei diesen Teilbewegungen um die durch den Elektromotor 1 bewirkte Drehung der Welle 12 und damit des Kurbelarms 6 um die Achse 9, um die durch den Elektromotor 2 bewirkte Drehung der Muffe 20 und mit dieser der Welle 12 um die Achse 19 und um die durch den Elektromotor 3 bewirkte Drehung des Ringkörpers 28 um die Achse 9 und damit des Überschiebers 5 um die Achse 7 relativ zu dem Kurbelarm 6.

### Bezugszeichenliste:

1. Elektromotor
2. Elektromotor
3. Elektromotor
4. Gehäuse
5. Überschieber
6. Kurbelarm
7. Achse
8. Hohlwelle
9. Achse
10. Wälzlager
11. Wälzlager
12. Welle
13. Zahnrad
14. Welle
15. Wälzlager
16. Zahnrad
17. Zahnrad
18. Ausleger
19. Achse
20. Muffe
21. Wälzlager
22. Wälzlager
23. Bereich
24. Zahnkranz
25. Wälzlager
26. Zahnrad
27. Zahnrad
28. Ringkörper
29. Achse
30. Schubstange
31. Achse
32. Blechhaube
33. Oberteil
34. Deckscheibe
35. Öffnung
36. Dichtung
37. Absetzplatte
38. Transportband
39. Schubfinger
40. Linie
41. Richtung
42. Glasgegenstand
43. Bahn
44. Bahnkurve
45. Berührungspunkt
46. Wegelement
47. Lösepunkt
48. Teil
49. Abtriebswelle
50. Abtriebswetle
51. Abtriebswelle

## Patentansprüche

1. Vorrichtung zum Überschieben von Glasgegenständen von einer Absetzplatte (37) einer Sektion einer I.S. (individual section) Glasformmaschine auf ein sich in einer Richtung (41) bewegendes Transportband (38) mittels eines, zum Schieben der Glasgegenstände eingerichteten, um eine vertikale Achse (7) schwenkbar an dem einen Ende eines Hebels gelagerten Überschiebers (5), wobei das andere Ende des Hebels mit einer um eine vertikale Achse (9) schwenkbar gelagerten Welle (12) in Verbindung steht, und wobei die Welle (12) um die ortsfeste vertikale Achse (19) einer drehbar gelagerten Welle (14) schwenkbar gelagert ist, mit einem ersten ortsfest angeordneten Elektromotor (1), der mit der Welle (12) in Antriebsverbindung steht, mit einem zweiten ortsfest angeordneten Elektromotor (2), der zur Schwenkung der Welle (12) um die Achse (19) eingerichtet ist und mit einem dritten ortsfest angeordneten Elektromotor (3), der zur Drehung des Überschiebers (5) um die Achse (7) relativ zu dem genannten Hebel eingerichtet ist, **dadurch gekennzeichnet, dass** der genannte Hebel ein mit der Welle (12) drehfest verbundener Kurbelarm (6) ist, dass an dem Überschieber (5) mit Abstand von der Achse (7) das eine Ende einer Schubstange (30) um eine vertikale Achse (31) schwenkbar angelenkt ist, deren anderes Ende über eine vertikale Achse (29), mit dem Kurbelarm (6) und dem Überschieber (5) eine Viergelenkkette bildend, in Antriebsverbindung mit dem dritten Elektromotor (3) steht.

2. Vorrichtung nach Anspruch 1, **dadurch gekennzeichnet, dass** die Welle (12) drehbar in einer Hohlwelle (8) gelagert ist, die ihrerseits drehbar in einer Muffe (20) gelagert ist, wobei die Muffe (20) in fester Verbindung mit einem drehfest mit der Welle (14) verbundenen Ausleger (18) steht, und wobei die Welle (14) in Antriebsverbindung mit dem zweiten Elektromotor (2) steht.

3. Vorrichtung nach Anspruch 1 oder 2, **dadurch gekennzeichnet, dass** der dritte Elektromotor (3) über ein erstes Stirnradgetriebe in Antriebsverbindung mit der Hohlwelle (8) steht, wobei die Hohlwelle (8) mit dem durch die Achse (29) definierten Anlenkungspunkt der Schubstange (30) in fester Verbindung steht.

4. Vorrichtung nach Anspruch 3, **dadurch gekennzeichnet, dass** das erste Stirnradgetriebe aus einem durch die Abtriebswelle (51) des dritten Elektromotors (3) getragenen Zahnrad (27), einem auf der Welle (14) relativ zu dieser drehbar gelagerten Zahnrad (26) und einem mit der Hohlwelle (8) in fester Verbindung stehenden Zahnkranz (24) besteht.

5. Vorrichtung nach einem der Ansprüche 1 bis 4, **dadurch gekennzeichnet, dass** der erste Elektromotor (1) über ein zweites Stirnradgetriebe in Antriebsverbindung mit der Welle (12) steht.

6. Vorrichtung nach Anspruch 5, **dadurch gekennzeichnet, dass** das zweite Stirnradgetriebe aus einem durch die Abtriebswelle (49) des ersten Elektromotors (1) getragenen Zahnrad (17), einem auf der Welle (14) relativ zu dieser drehbar gelagerten Zahnrad (16) und einem drehfest mit der Welle (12) in Verbindung stehenden Zahnrad (13) besteht.

7. Vorrichtung nach einem der Ansprüche 1 bis 6, **dadurch gekennzeichnet, dass** sich die Abtriebswelle (50) des zweiten Elektromotors (2) koaxial zu der Welle (14) erstreckt.

8. Vorrichtung nach einem der Ansprüche 1 bis 7, **gekennzeichnet durch** ein Gehäuse (4), dessen Oberteil (33) eine **durch** eine Deckscheibe (34) dargestellte Oberseite aufweist, dass in einer Öffnung (35) der Deckscheibe (34) die Muffe (20) aufgenommen ist, und dass die Deckscheibe (34) zusammen mit der Muffe (20) um die Achse (19) drehbar ist.

9. Vorrichtung nach Anspruch 8, **dadurch gekennzeichnet, dass** das Gehäuse (4) ein die Elektromotoren (1, 2, 3) tragendes deckelartiges Teil (48) aufweist.

10. Vorrichtung nach Anspruch 8 oder 9, **dadurch gekennzeichnet, dass** das Gehäuse (4) ein durch eine Blechhaube (32) dargestelltes, die Elektromotoren (1, 2, 3) aufnehmendes Unterteil aufweist.

11. Vorrichtung nach einem der Ansprüche 8 bis 10, **dadurch gekennzeichnet, dass** das topfartig ausgebildete Oberteil (33) geschlossen ausgebildet ist und Getriebeteile sowie eine Ölfüllung aufnimmt.

12. Vorrichtung nach einem der Ansprüche 8 bis 11, **dadurch gekennzeichnet, dass** das Oberteil (33) durch ein Gussteil dargestellt ist.

13. Vorrichtung nach einem der Ansprüche 9 bis 12, **dadurch gekennzeichnet, dass** das Teil (48) durch ein Gussteil dargestellt ist.

14. Vorrichtung nach einem der Ansprüche 9 bis 12, **dadurch gekennzeichnet, dass** die drei Elektromotoren (1 bis 3) in dem Teil (48) in einer Nebeneinanderanordnung gehalten sind.

15. Vorrichtung nach einem der Ansprüche 8 bis 14, **dadurch gekennzeichnet, dass** sich das Gehäuse (4) unterhalb des Niveaus der Absetzplatte (37) erstreckt.

## Claims

1. Device for pushing glass objects from a dead plate (37) of a section of an I.S. (individual section) glassware forming machine onto a conveyor belt (38), moving in a direction (41), by means of a pusher (5), which is arranged to push the glass objects and is mounted on one end of a lever so as to be able to pivot about a vertical axis (7), wherein the other end of the lever is connected to a shaft (12) which is mounted so as to be able to pivot about a vertical axis (9), and wherein the shaft (12) is mounted so as to be able to pivot about the stationary vertical axis (19) of a rotatably mounted shaft (14), having a first stationary electric motor (1) which is drivingly connected to the shaft (12), having a second stationary electric motor (2) which is arranged to pivot the shaft (12) about the axis (19), and having a third stationary electric motor (3) which is arranged to rotate the pusher (5) about the axis (7) relative to said lever, **characterised in that** said lever is a crank arm (6) which is connected to the shaft (12) for conjoint rotation therewith, **in that**, on the pusher (5), at a distance from the axis (7), one end of a push rod (30) is articulated so as to be able to pivot about a vertical axis (31), the other end of the push rod being drivingly connected to the third electric motor (3) via a vertical axis (29), thus forming a four-bar chain with the crank arm (6) and the pusher (5).

2. Device as claimed in claim 1, **characterised in that** the shaft (12) is rotatably mounted in a hollow shaft (8) which, for its part, is rotatably mounted in a sleeve (20), wherein the sleeve (20) is fixedly connected to a boom (18) connected to the shaft (14) for conjoint rotation therewith, and wherein the shaft (14) is drivingly connected to the second electric motor (2).

3. Device as claimed in claim 1 or 2, **characterised in that** the third electric motor (3) is drivingly connected to the hollow shaft (8) via a first spur-gear mechanism, wherein the hollow shaft (8) is fixedly connected to the articulation point of the push rod (30) defined by the axis (29).

4. Device as claimed in claim 3, **characterised in that** the first spur-gear mechanism consists of a toothed wheel (27) supported by the driven shaft (51) of the third electric motor (3), of a toothed wheel (26) mounted on the shaft (14) so as to be able to rotate relative thereto, and of a crown gear (24) fixedly connected to the hollow shaft (8).

5. Device as claimed in any one of claims 1 to 4, **characterised in that** the first electric motor (1) is drivingly connected to the shaft (12) via a second spur-gear mechanism.

6. Device as claimed in claim 5, **characterised in that** the second spur-gear mechanism consists of a toothed wheel (17) supported by the driven shaft (49) of the first electric motor (1), of a toothed wheel (16) mounted on the shaft (14) so as to be able to rotate relative thereto, and of a toothed wheel (13) connected to the shaft (12) for conjoint rotation therewith.

7. Device as claimed in any one of claims 1 to 6, **characterised in that** the driven shaft (50) of the second electric motor (2) extends coaxially with respect to the shaft (14).

8. Device as claimed in any one of claims 1 to 7, **characterised by** a housing (4), the upper part (33) of which comprises an upper side formed by a cover plate (34), in that the sleeve (20) is received in an opening (35) in the cover plate (34), and in that the cover plate (34) can be rotated together with the sleeve (20) about the axis (19).

9. Device as claimed in claim 8, **characterised in that** the housing (4) comprises a cover-like part (48) supporting the electric motors (1, 2, 3).

10. Device as claimed in claim 8 or 9, **characterised in that** the housing (4) comprises a lower part formed by a sheet metal hood (32) and receiving the electric motors (1, 2, 3).

11. Device as claimed in any one of claims 8 to 10, **characterised in that** the pot-like upper part (33) is formed in a closed manner and receives transmission parts as well as oil filling.

12. Device as claimed in any one of claims 8 to 11, **characterised in that** the upper part (33) is formed by a cast part.

13. Device as claimed in any one of claims 9 to 12, **characterised in that** the part (48) is formed by a cast part.

14. Device as claimed in any one of claims 9 to 12, **characterised in that** the three electric motors (1 to 3) are held in the part (48) in a side-by-side arrangement.

15. Device as claimed in any one of claims 8 to 14, **characterised in that** the housing (4) extends below the level of the dead plate (37).

## Revendications

1. Dispositif pour faire glisser des objets en verre d'une plaque de pose (37) d'une section d'une machine de formage de verre I.S. (section individuelle) sur une bande transporteuse (38) se déplaçant dans une direction (41) à l'aide d'un manchon glissant (5) logé de manière à pouvoir pivoter autour d'un axe vertical (7) sur une extrémité d'un levier, aménagé pour le glissement des objets en verre, l'autre extrémité du levier étant en liaison avec un arbre (12) logé de manière à pouvoir pivoter autour d'un axe vertical (9), et l'arbre (12) étant logé de manière à pouvoir pivoter autour de l'axe vertical fixe (19) d'un arbre logé de manière à pouvoir tourner (14), avec un premier moteur électrique (1) agencé fixement qui est en liaison d'entraînement avec l'arbre (12), avec un deuxième moteur électrique (2) agencé fixement qui est aménagé pour le pivotement de l'arbre (12) autour de l'axe (19) et avec un troisième moteur électrique (3) agencé fixement qui est aménagé pour la rotation du manchon glissant (5) autour de l'axe (7) par rapport au levier cité, **caractérisé en ce que** le levier cité est un bras de manivelle (6) relié de manière fixe en rotation à l'arbre (12), **en ce que** l'une extrémité d'une tige de poussée (30) est articulée de manière à pouvoir pivoter autour d'un axe vertical (31) au manchon glissant (5) à distance de l'axe (7), dont l'autre extrémité est en liaison d'entraînement avec le troisième moteur électrique (3) par un axe vertical (29), formant avec le bras de manivelle (6) et le manchon glissant (5) une chaîne à quatre articulations.

2. Dispositif selon la revendication 1, **caractérisé en ce que** l'arbre (12) est logé de manière à pouvoir tourner dans un arbre creux (8) qui est logé de son côté de manière rotative dans un manchon (20), le manchon (20) étant en liaison fixe avec un bras (18) relié de manière fixe en rotation à l'arbre (14), et l'arbre (14) étant en liaison d'entraînement avec le deuxième moteur électrique (2).

3. Dispositif selon la revendication 1 ou 2, **caractérisé en ce que** le troisième moteur électrique (3) est en liaison d'entraînement par un premier engrenage droit avec l'arbre creux (8), l'arbre creux (8) étant en liaison fixe avec le point d'articulation défini par . l'axe (29) de la tige de poussée (30).

4. Dispositif selon la revendication 3, **caractérisé en ce que** le premier engrenage droit se compose d'une roue dentée (27) portée par l'arbre de sortie (51) du troisième moteur électrique (3), d'une roue dentée (26) logée de manière à pouvoir tourner sur l'arbre par rapport à celui-ci et d'une couronne dentée (24) se trouvant en liaison fixe avec l'arbre creux (8).

5. Dispositif selon l'une quelconque des revendications 1 à 4, **caractérisé en ce que** le premier moteur électrique (1) est en liaison d'entraînement par un second engrenage droit avec l'arbre (12).

6. Dispositif selon la revendication 5, **caractérisé en ce que** le second engrenage droit se compose d'une roue dentée (17) portée par l'arbre de sortie (49) du premier moteur électrique (1), d'une roue dentée (16) logée de manière à pouvoir tourner sur l'arbre (14) par rapport à celui-ci et d'une roue dentée (13) se trouvant en liaison fixe en rotation avec l'arbre (12).

7. Dispositif selon l'une quelconque des revendications 1 à 6, **caractérisé en ce que** l'arbre de sortie (50) du deuxième moteur électrique (2) s'étend coaxialement à l'arbre (14).

8. Dispositif selon l'une quelconque des revendications 1 à 7, **caractérisé par** un boîtier (4), dont la partie supérieure (33) présente un côté supérieur constitué par un disque de recouvrement (34), en ce que le manchon (20) est reçu dans une ouverture (35) du disque de recouvrement (34), et en ce que le disque de recouvrement (34) peut tourner conjointement avec le manchon (20) autour de l'axe (19).

9. Dispositif selon la revendication 8, **caractérisé en ce que** le boîtier (4) présente une partie (48) de type couvercle portant les moteurs électriques (1, 2, 3).

10. Dispositif selon la revendication 8 ou 9, **caractérisé en ce que** le boîtier (4) présente une partie inférieure recevant les moteurs électriques (1, 2, 3) constituée par un capot de tôle (32).

11. Dispositif selon l'une quelconque des revendications 8 à 10, **caractérisé en ce que** la partie supérieure (33) formée comme un pot est réalisée fermée et reçoit des parties d'engrenage ainsi qu'un remplissage d'huile.

12. Dispositif selon l'une quelconque des revendications 8 à 11, **caractérisé en ce que** la partie supérieure (33) est constituée par une partie moulée.

13. Dispositif selon l'une quelconque des revendications 9 à 12, **caractérisé en ce que** la partie (48) est constituée par une partie moulée.

14. Dispositif selon l'une quelconque des revendications 9 à 12, **caractérisé en ce que** les trois moteurs électriques (1 à 3) sont maintenus dans la partie (48) dans un agencement côte à côte.

15. Dispositif selon l'une quelconque des revendications 8 à 14, **caractérisé en ce que** le boîtier (4) s'étend sous le niveau de la plaque de pose (37).
